# EUROPEAN PATENT APPLICATION

(11) **EP 1 580 640 A1**
(43) Date of publication of application: **28.09.2005**
(21) Application number: 03814542.1
(22) Date of filing: 02.12.2003
(51) Int. Cl.: G06F 1/00

(54) **ELECTRONIC DEVICE, DEVICE FUNCTION CONTROL METHOD, AND SERVER**

(30) Priority: 26.12.2002 JP 2002377573; 26.05.2003 JP 2003147328
(71) Applicant: SONY CORPORATION, Tokyo 141-0001 (JP)
(72) Inventor: NAKAMURA, Junichi, Shinagawa-ku, Tokyo 141-0001 (JP); SAOYAMA, Hiroyuki, Shinagawa-ku, Tokyo 141-0001 (JP); YUASA, Naoki, Shinagawa-ku, Tokyo 141-0001 (JP); INOUE, Hiraku, Shinagawa-ku, Tokyo 141-0001 (JP); KOYA, Takashi, Shinagawa-ku, Tokyo 141-0001 (JP); KAWAGUCHI, Noriyasu, Shinagawa-ku, Tokyo 141-0001 (JP); IGARASHI, Hideko, Shinagawa-ku, Tokyo 141-0001 (JP); KATO, Tsuyoshi, Shinagawa-ku, Tokyo 141-0022 (JP); YAMAMOTO, Yoshinori, Shinagawa-ku, Tokyo 141-0001 (JP)
(74) Representative: Nicholls, Michael John
(86) International application number: PCT/JP2003/015438
(87) International publication number: WO 2004/061626

(57) **Abstract**

An electronic apparatus, having functions on which use limitations can be imposed, is disclosed. A variety of functions are loaded on the electronic apparatus by hardware circuitry or by computer programs. Use of a certain function(s) is limited by setting a function limiting flag to "1", provided that an other function(s) are usable within a period of a preset number of days of possible test use. An application is made from the apparatus to a key issuing source for purchasing usable functions. The key issuing source then issues a limitation removing key. The limitation removing key may be acquired from the key issuing source by a mobile phone terminal and transmitted to the apparatus by infrared ray communication. The apparatus rewrites the function limiting flag by this limitation removing key. If the number of days of actual test use has reached the number of days of possible test use, the CPU of the apparatus does not carry out the function(s) the function limiting flag of which is "1".

## Description

### Technical Field

This invention relates to an electronic apparatus, such as an audio apparatus or a video apparatus, a method and a server for controlling the function(s) of the electronic apparatus.

The present application claims priority of Japanese Patent Application No.2002-377573 filed in Japan on December 26, 2002 and Japanese Patent Application No.2003-147328 filed in Japan on May 26, 2003, the entireties of which are incorporated by reference herein.

### Background Art

In recent electronic apparatus, especially those for household use, those loaded with a large number of functions are presented to the market. These apparatus are high in potency as commodities and instigate the desire of the consumers to purchase the apparatus. on the other hand, these apparatus meet the desire on the part of the consumer for multiplication of functions. However, the apparatus becomes expensive to frustrate the consumer in purchasing the goods. In addition, there is raised a problem that the functions of the apparatus become complicated and training on the part of a user is required for the user to exploit the functions, or the convenient functions, loaded on the apparatus, are left unexploited.

With recent electronic apparatus, it is possible to add functions, by adding the software, such as programs or data, after manufacture or sale of the apparatus, by exploiting diversified computer or software techniques.

Turning to this function addition after manufacture of electronic apparatus, the Japanese Laid-Open Patent Publication 2002-318704 shows that, in an electronic apparatus, such as AV (audio/visual) amplifier, a program may be added from e.g. a CD-ROM to a rewritable non-volatile memory, such as a flash memory, to modify the program stored in the non-volatile memory, to add a new function(s), by the following method:
With this method, version flags, associated with respective functions, are set in a non-volatile memory. If, after manufacture and sale of the apparatus, the producer of the apparatus has sequentially developed functional programs Pa, Pb and Pc, implementing new functions A, B and C, respectively, the producer sequentially sells first to third CD-ROMs, having stored therein the functional programs Pa, Pb and Pc, loading programs and the version information.

The functional program Pb implements the function B unconditionally, while checking the bit associated with the function A of the version flag described above to implement the function A only when the bit associated with the function A is set to "1". The functional program Pc implements the function C unconditionally, while checking the bits associated with the functions A and B of the version flag to implement the function A only when the bit associated with the function A is set to "1" and to implement the function B only when the bit associated with the function B is set to "1".

When the functions A to C are supplied by first to third CD-ROMs, respectively, the user may add only desired one(s) of these functions. For example, if only the latest function C is to be added, the third CD-ROM is purchased and the functional program Pc for implementing the function C is loaded by the loading program on the non-volatile memory in the apparatus.

In this case, the CPU of the apparatus sets the bit of the version flag associated with the function C to "1", based on the version information, with the bits associated with the apparatus A and B remaining "0". Hence, as from this time, only the function C of the functions A to C is executed on the apparatus,

In this manner, the user, who has purchased the apparatus, may purchase and add, at relatively low costs, only the functions he/she is in need of.

Before scrutinizing into the task of adding functions after manufacture and sale of the equipment, as disclosed in the aforementioned patent publications, it becomes of a problem which and how many functions are to be loaded on the equipment.

If all or many of the functions, contemplated at the time of manufacture of the equipment, are loaded, the equipment may be high in potency as commodities and instigate the desire of the consumers to purchase the apparatus. In addition, the equipment meets the desire on the part of the consumer for multiplication of functions. However, the apparatus becomes expensive to frustrate the consumer in purchasing the goods. In addition, there is raised a problem that the functions of the apparatus become complicated and necessitate training on the part of a user in order for the user to exploit the functions, or the convenient functions, loaded on the apparatus, may be left unexploited.

Thus, the producer of the apparatus has to manufacture and sell an upper apparatus type of e.g. an AV amplifier, loaded with many functions, and a lower apparatus type thereof loaded with only a smaller number of functions, or a wide variety of apparatus types inclusive of intermediate apparatus types.

The result is that costs in design and manufacture of the apparatus types are increased, such that, an upper order apparatus type, for example, is expensive as compared to the case where only the upper order apparatus type is manufactured, while the consumer is at a loss which apparatus to purchase, even though the margin for selection is increased.

### Disclosure of the Invention

It is therefore an object of the present invention to provide a novel electronic apparatus, a function controlling method for the electronic apparatus, and a server, with which it is possible to eliminate the prior-art problems described above.

It is also aimed by the present invention to be able to meet the demand for functions and costs of the apparatus, entertained by a larger number of users, and to enable a producer of the apparatus to provide a larger number of consumers with the apparatus.

The present invention provides an electronic apparatus, for part or all of the functions of which the possible use range, as the number of days or times or the time duration of possible use, is set. The apparatus comprises a function executing unit for executing one or more functions, storage means, having stored therein the possible use range for the respective functions, as setting information, and controlling means for rewriting the setting information for extending the possible use range of the function(s), the use of which beyond the range of possible use has been allowed by the key information from the source of use permission, out of the functions, the possible use range of which has been set by the setting information, and for referencing the setting information for controlling the function(s) execution by said function executing unit.

By way of limiting the use of the function(s), the purchaser of the electronic apparatus of the present invention may tentatively use part or all of its functions within a range of preset number of days or times or a preset time duration and, if the purchaser intends to use the function(s) beyond the range of the possible test use, he/she has to purchase the function(s).

In case of using the function(s) beyond the range of the possible test use, the user requests the source of use permission, as e.g. a producer of the apparatus, to permit the use of the function(s), and applies for purchasing the function(s). In response thereto, the source of use permission issues, for the user, the key information for removing use limitations of the function(s) to permit the user to use the function(s).

With the electronic apparatus, according to the present invention, the setting information for the use-permitted function(s) is rewritten by the controlling means, such as CPU, so that the function(s) may be carried out subsequently by the function executing unit.

Hence, the producer of the apparatus is able to elevate the potency of the apparatus as a commodity and, since there is no necessity for manufacturing and marketing a large variety of apparatus types, the cost of the apparatus may be lowered. Moreover, the cost of the use-limited function(s) may be recovered when the user purchases the function(s), and hence the apparatus may be less costly.

The consumer is not at a loss which type of the apparatus is to be purchased, and may purchase the apparatus itself at a low cost. After purchasing the apparatus, the consumer is able to newly purchase the function(s) as he/she continues to use the function(s) not limited for use or the function(s) use-permitted as a result of purchasing the function(s).

Moreover, if the function(s) may be used within the range of possible test use, the user may use the function(s) within the range of possible test use to recognize the necessity or utility of the function, and may purchase the function(s) after he/she is trained to some extent in these function(s). This is convenient not only for the user, but also for the producer who is able in this manner to appeal the value of the function(s).

In addition, even for a use-limited function(s), the hardware circuitry of the software, such as a program, for executing the function(s), is loaded, and only the key information for removing the use limitations is distributed. Hence, the risk attendant on the distribution may be lowered as compared to the case where the program is distributed for adding the function(s) after shipment of the apparatus.

Other objects and advantages of the present invention will become more apparent from the following description of the invention especially when read in conjunction with the drawings.

### Brief Description of the Drawings

Fig.1 shows an example of a system employing an electronic apparatus according to the present invention.
Fig.2 shows an example of an electronic apparatus according to the present invention.
Figs.3A to 3F show an example of a setting table and a management table within the apparatus.
Fig.4 is a flowchart showing an example of a function executing control processing routine run by a CPU of the apparatus.
Fig.5 shows an example of a system in an off-line state.
Fig.6 is a flowchart showing an example of processing for accepting a function purchasing application executed by a key issuing source in an off-line state.
Fig.7 shows the system configuration in case of acquisition of a limitation removing key with use of a mobile phone terminal.
Fig.8 is a flowchart showing the processing for acquisition of a limitation removing key with use of a mobile phone terminal.
Fig.9 shows an example of a system in an on-line state.
Fig. 10 is a flowchart showing a portion of an illustrative processing routine for on-line acquisition of a limitation removing key.
Fig.11 is a flowchart showing another portion of the illustrative processing routine for on-line acquisition of a limitation removing key.
Fig.12 is a flowchart showing yet another portion of the illustrative processing routine for on-line acquisition of a limitation removing key.
Fig.13 shows several illustrative images represented in a processing routine shown in Figs. 10 to 12.
Fig.14 shows other several illustrative images represented in a processing routine shown in Figs.10 to 12.
Fig.15 shows an example of a limitation removing processing routine executed by the CPU of the apparatus.

### Best Mode for Carrying out the Invention

Referring to the drawings, preferred embodiments of the present invention are explained in detail.

The present invention may roughly be classified into a case where a user purchases an apparatus and use-limited functions, and a case where a source of use permission leases or rents an apparatus for a user. The following description is mainly directed to the former case, and the latter case is subsequently explained.

First, the system employing the electronic apparatus according to the present invention is schematically explained.

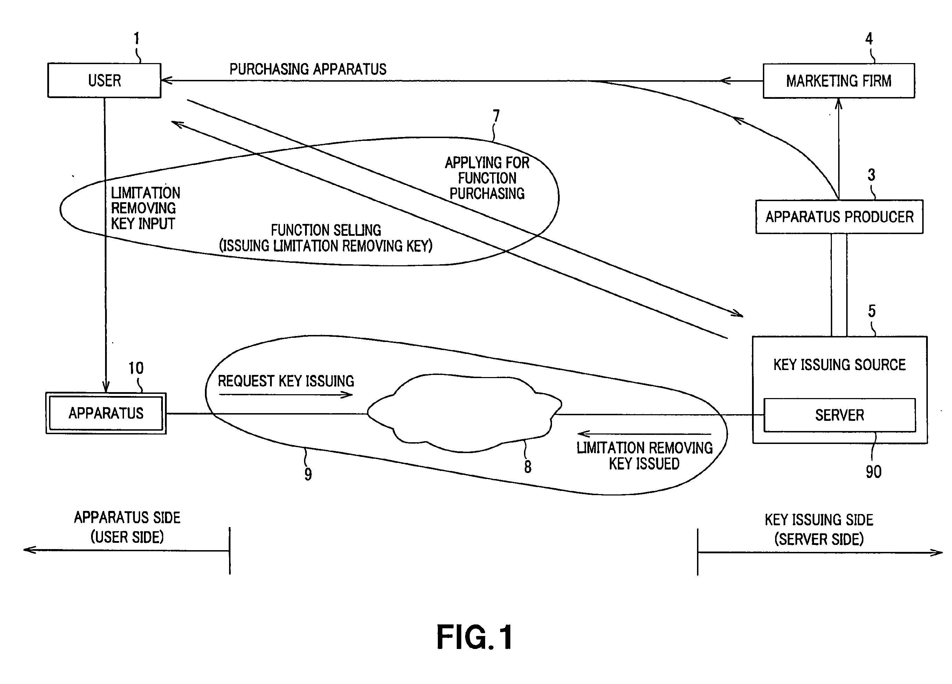

Fig.1 shows an example of a system including an electronic apparatus according to the present invention, on which the method for controlling the functions of the apparatus is carried out. In this system, an apparatus side, as the user side, is connected off-line or on-line to a key issuing side, that is, the manufacturer side.

An apparatus 10 is an electronic apparatus, manufactured by an apparatus producer 3, sold by the apparatus producer 3 either directly or through a marketing firm 4 and purchased by a user 1. Although a plural number of functions are loaded on the apparatus 10, there is imposed a limitation on using part of all of these functions.

Specifically, in shipping the apparatus 10, an apparatus ID, as apparatus discriminating information for identifying the apparatus 10, such as a code proper to the apparatus 10, is written in an internal memory of the apparatus 10, whilst the presence/ absence of the use limitation for the respective functions is also written therein as a function limitation flag.

It is noted that, in the present embodiment, the number of days for possible test use is set, as later explained, such that the user 10 is able to use the use-limited functions free of charge only for the time corresponding to the number of possible test use as from the date of purchase.

The user who has purchased the apparatus with use-limited functions and who is desirous to use the function(s) even after lapse (digestion) of the days of possible test use, applies for purchase of the function(s) to the apparatus producer 3 or to a key issuing source 5 as a firm associated with the apparatus producer.

The key issuing source 5 confirms the apparatus 10, as later explained, and verifies the presence/ absence of agreement to the use allowance contract or the settlement (payment) of the function purchase fee. The key issuing source then determines whether or not the function(s) is to be sold. When the function(s) is to be sold, the key information for removing the use limitations on the function(s) is generated and issued to the user 1. The key information includes both commands and data.

Specifically, with an offline procedure 7, a limitation removing key is issued from the key issuing source 5 to the user 1, responsive to an application for purchase of the function(s) from the user 1. The user inputs so issued limitation removing key to the apparatus 10.

In case the apparatus 10 and a server 90 of the key issuing source 5 can be interconnected over a wide area network 8, such as the Internet, a request for issuing a limitation removing key is made from the apparatus 10 to the server 90, by an offline procedure 9, and the limitation removing key is issued from the server 90 to the apparatus 10.

When the limitation removing key is input to or received by the apparatus 10, the CPU of the apparatus 10 is able to rewrite a function limiting flag, written in the internal memory of the apparatus 10, as described above, such that the user 1 may subsequently use the function(s) purchased.

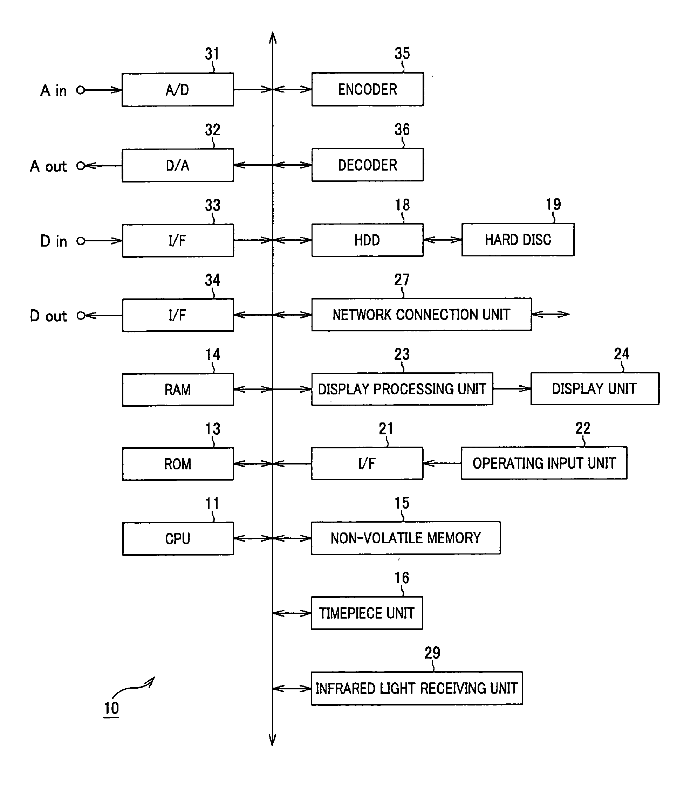

Fig.2 shows an example of the apparatus 10, constructed by a digital audio apparatus.

The apparatus 10 includes a CPU 11, to a bus 12 of which are connected a ROM 13, a RAM 14, a non-volatile memory 15 and a timepiece circuit 16. The ROM has stored therein a program(s), including various routines, executed by the CPU 11, as later explained, or fixed data, such as apparatus ID or data displayed on a screen. The RAM operates as a work area for the CPU 11. The non-volatile memory is a rewritable memory, such as a flash memory.

The apparatus ID is made up by, for example, a code specifying the type of the apparatus 10 in question, and a serial number proper to the apparatus 10.

In the non-volatile memory 15, the presence/ absence of use limitations on the various functions of the apparatus 10 is written, along with the number of days of possible test use, at the time of shipment of the apparatus 10.

The timepiece circuit 16 keeps the time of 24 hours each day in order for the CU 11 to count the actual number of test days.

An operating input unit 22 is connected over an interface 21 to the bus 12, to which there is also connected a display unit 24 via display processing unit 23. The operating input unit 22 and the display unit 24 together make up a user interface. More specifically, the operating input unit 22 is formed by various buttons, a touch panel and a mouse, whilst the display unit 24 is formed by e.g. a liquid crystal display.

To the bus 12 are also connected, as function executing units, namely an A/D converter 31, a D/A converter 32, interface 33, 34, an encoder 35, a decoder 36 and a hard disc drive (HDD) 18. The A/D converter 31 converts input analog signals Ain from outside into digital speech signals to output the resultant signals to the bus 12. The D/A converter converts the digital voice signals, obtained on the bus 12 following decompression and decoding, into output analog voice signals Aout, which are then output to outside. The interface 33 captures compressed and encoded input digital voice signals Din from outside to the bus 12, while the interface 34 outputs compressed and encoded digital voice signals, obtained on the bus 12, as output digital voice signals Dout to outside. The encoder 35 compresses and encodes digital voice signals, obtained on the bus 12, while the decoder 36 decompresses and decodes the compressed and encoded digital voice signals, obtained on the bus 12. The HDD is provided with a hard disc 19.

That is, the present apparatus 10 has a voice processing function roughly comprising (1) a function of converting the input analog voice signals Ain from outside into digital voice signals, by the A/D converter 31, compressing and encoding the digital voice signals by the encoder 35, outputting the compressed and encoded signals to outside via interface 34 as output digital voice signals Dout, or recording the compressed and encoded signals on the hard disc 19. The voice processing function also comprises (2) a function of capturing the compressed and encoded input digital voice signals Din from outside over the interface 33 to record the signals by the HDD 18 on the hard disc 19, or of expanding and decoding the input digital voice signals by the decoder 36 and converting the signals by the D/A converter 32 into the analog voice signals Aout which are then output to outside. The voice processing function also comprises (3) a function of reproducing the compressed and encoded digital voice signals, recorded on the hard disc 19, from the hard disc 19 by the HDD 18 to output the reproduced signals as the output digital voice signals Dout over the interface 34, or of decompressing and decoding the signals by the decoder 36 and converting the resultant signals by the D/A converter 32 into output analog voice signals Aout which are then output to outside.

The encoder 35 and the decoder 36 are also provided with the functions of compressing/ encoding and decompressing/ decoding the voice signals by an encoding system such as MP3 (MPEG-1 Audio Layer-3) or ATRAC (registered trademark: Adaptive Transform Acoustic Coding-3). In the present embodiment, use limitations are imposed on the function of compressing/ encoding and decompressing/ decoding voice signals by the ATRAC3 and on the function of recording the voice signals on the hard disc 19.

In the present embodiment, there are provided, for enabling the aforementioned on-line procedure, a network connection unit 27 for connection to a wide-range network, such as the Internet, and an infrared light receiving unit 29 for receiving the key information, such as a limitation removing key, transmitted from a mobile phone terminal, provided with the infrared communication function, as later explained, with the aid of infrared rays.

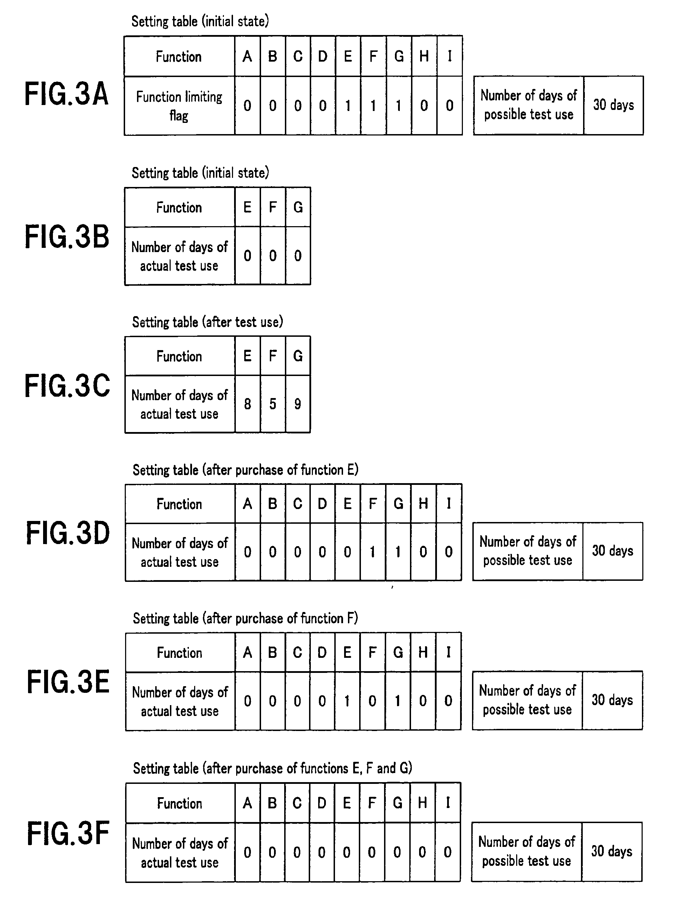

A function limiting flag sets, for each function of the apparatus 10, whether or limitation is to be imposed on using a particular function, as shown in Fig.3. In the present embodiment, no use limitation is imposed on the functions A, B, C, D, H and I, out of the functions A to I, such that the function limiting flag is set to "0" for these non-use-limited functions. On the other hand, use limitation is imposed on the functions E, F and G, such that the function limiting flag is set to "1" for these functions.

To the function limiting flag is added the number of days of possible test use and the resulting data is written as a setting table in the non-volatile memory 15. The number of possible test days is unanimously set to, for example, 30 days for each of the use-limited functions E to G.

For these use-limited functions, the CPU 11 supervises the execution of the respective functions, in such a manner that, if a function in question is used even once during the 24 hours of a day, the day is counted as the number of actual use of the function and, if conversely the function is not used at all during the 24 hours of a day, the day is not counted as the number of actual use of the function. The CPU then writes the number of days of test use, thus counted, for each of the use-limited functions, as a management table shown in Figs.3B and 3C, in the non-volatile memory 15.

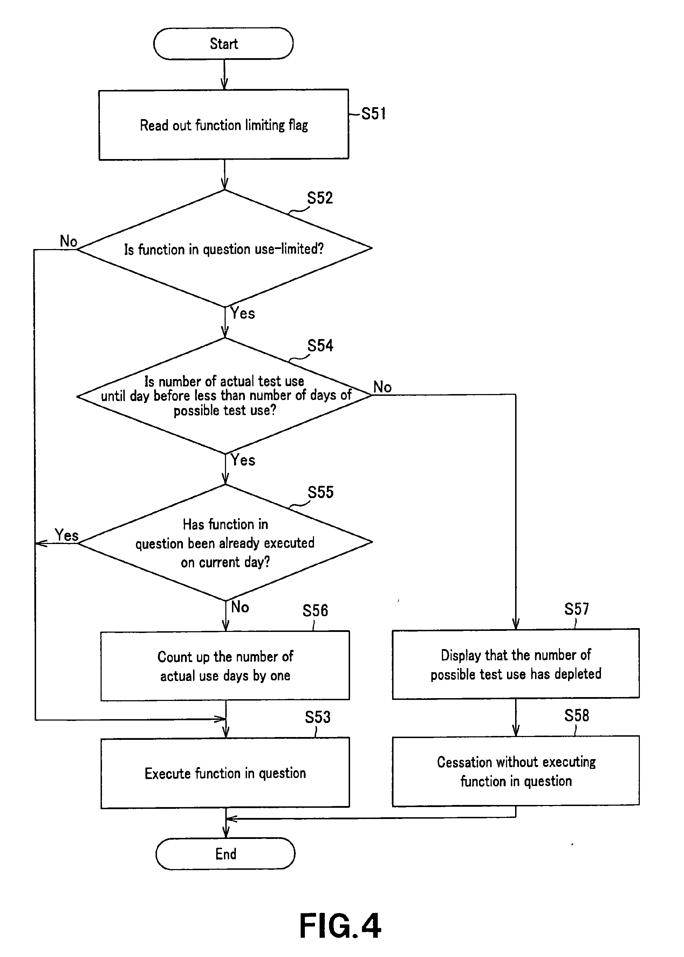

Fig.4 shows an example of a function execution control processing routine, executed by the CPU 11 in operating the apparatus 10.

In the function execution control subroutine of the present embodiment, each time the CPU 11 is about to execute a given function, it reads out in a step S51 the function limiting flag pertinent to the function. In the next step S52, the CPU verifies, from the contents of the function limiting flag, whether or not the use limitation has been imposed on the function. If no use limitation is imposed on the function, the CPU proceeds to the next step S53 to execute the function.

In case use limitation is imposed on the function about to be executed, the CPU proceeds from the step S52 to a step S54 to verify whether or not the number of days of actual use of the function until the day before is less than the number of days of possible test use. If the number of days of actual use of the function until the day before is less than the number of days of possible test use, the CPU proceeds to a step S55 to verify whether or not the function has already been executed on the day (current day).

If the function in question has not been executed on the current day, the CPU proceeds from the step S55 to a step S56 and the number of days of actual use of the function is counted up by one. The CPU then proceeds to the step S53 to execute the function. If the function has already been executed on the current day, the number of days of actual use of the function has already been counted up, so that the CPU directly proceeds from the step S55 to the step S53 to execute the function.

Since the counting of the number of days of actual use of the function is controlled in this manner, the number of days of actual test use until the day before and the number of actual test use on the current day are written in a management table, such as one shown in Fig.3C.

If it is verified in the step S54 that the number of days of actual test use until the day before has reached the number of days of possible test use, the CPU proceeds to a step S57 to indicate on a display 24 the effect that, since the number of days of possible test use has been reached, the function cannot be executed. The CPU then proceeds to a step S58 where the hardware circuit executing the function and the software responsible for the function, such as the driver software, is set to a standstill (the state of operation cessation) without executing the function.

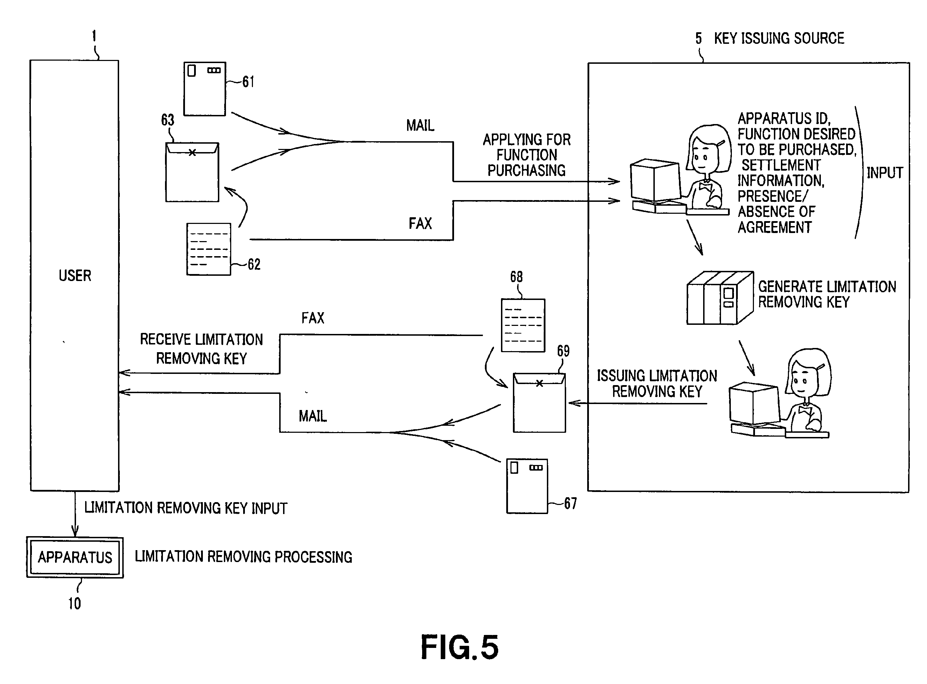

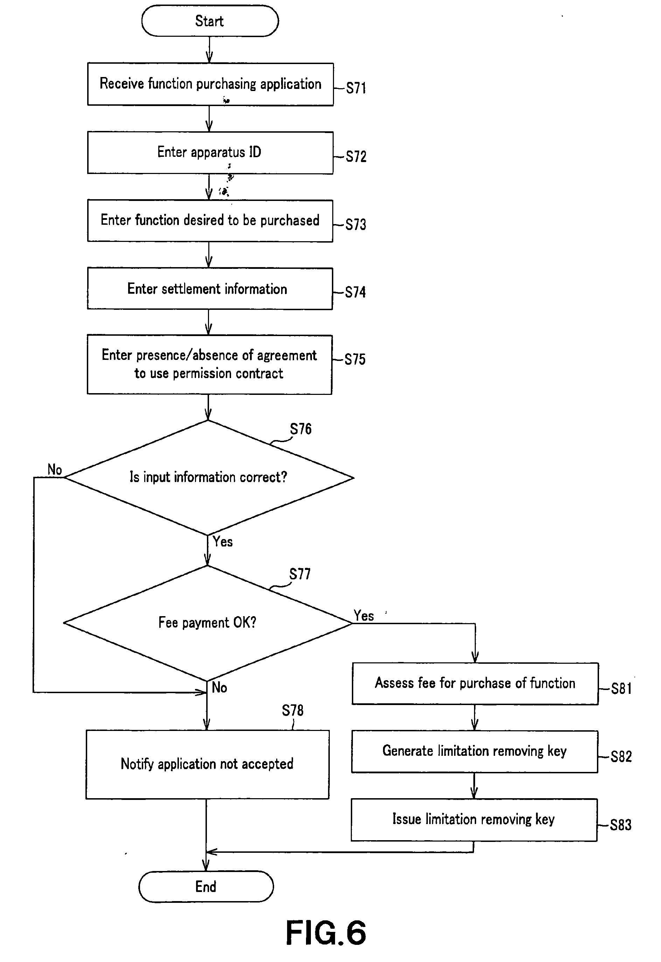

The offline issuance and acquisition of the limitation removing key is now explained. First, such issuance and acquisition by mail or fax is explained with reference to Figs.5 and 6.

As a method for offline procedure, shown in Fig.1, a user applies for purchasing a function(s) to the key issuing source 5 by mail or fax, as shown in Fig.5. To this end, the apparatus producer shipping an apparatus bundles a postcard for purchasing the function 61, a writing 62 and an envelope 63 etc. with the apparatus 10, at the time of shipment.

The user enters the apparatus ID, the function(s) he/she desires to purchase, settlement information and the effect of agreement to the use allowance contract, on the postcard 61 or writing 62, and mails the postcard 61 or the envelope 63 with the writing 62 enclosed therein to the key issuing source 5, or sends the writing 62 by fax to the key issuing source. The apparatus ID may also be entered by the apparatus producer from one apparatus to another.

The use allowance contract obligates the user 1 not to deliver a limitation removing key, acquired by purchasing the apparatus, to a third party by a method other than a method as approved by the contract, or not to tamper with data of the above setting table or management table.

On accepting the application for purchase of the function(s) from the user 1, the key issuing source 5 enters necessary items in a host computer and checks the settlement to decide whether or not the function is to be sold. If the function is to be sold, the key information for removing the use limitation of the function(s), is generated and a postcard 67 stating the limitation removing key is mailed to the user 1. Or, a writing 68 stating the limitation removing key is sealed in an envelope 69 and mailed, or transmitted by fax.

Fig.6 shows an example of the processing executed by the key issuing source 5 for accepting the application for purchasing the function(s). In this processing for accepting the application for purchasing the function(s), the application for purchasing the function(s) is received from the user 1 in a step S71. Then, in the next steps S72 to S75, the apparatus ID, the function(s) the user desires to purchase, settlement information and the presence/ absence of agreement to the use allowance contract, are sequentially entered to a host computer. In the next step S76, it is verified whether or not the input information is correct.

In case the input information is not correct, for example, if the function(s) the user desires to purchase is not provided in the apparatus 10 in question, or there is no agreement to the use permission contract, the CPU proceeds from the step S76 to a step S78 to notify to the user 1 that the application for purchasing the function cannot be accepted.

In case the input information is correct, the CPU proceeds from the step S76 to a step S77 to verify from e.g. the settlement information whether or not payment of the fee for the function purchased will be made reliably. If it is determined that the payment is not certain, the CPU proceeds to a step S78 to notify to the user 1 that the application for purchasing the function cannot be accepted.

If it is determined that payment of the fee for the function purchased will be made reliably, the CPU proceeds from the step S77 to the step S81 to assess the user for the function(s) purchased. The CPU then proceeds to a step S82 to generate the key information for removing the use limitation for the function(s) desired by the user. The CPU then proceeds to a step S83 to issue a limitation removing key for the user 1.

Specifically, the limitation removing key is such a command and data which will re-write the entire setting table, shown for example in Fig.3A. In case the apparatus 10 has the function of reading out readout codes, such as bar code, the limitation removing key may be printed and issued as readout codes, such as bar codes.

On receipt of the limitation removing key, the user 1 enters the limitation removing key to the apparatus 10, as shown in Fig.5. The limitation removing processing routine of the apparatus 10 is formulated so that, by so doing, the CPU 11 of the apparatus 10 will rewrite the setting table in the non-volatile memory 15.

Fig.3D shows the state in which, as a result of purchasing the function E, the function limiting flag pertinent to the function E has been rewritten from "1" to "0". Fig.3E shows the state in which, as a result of purchasing the function F, the function limiting flag pertinent to the function F has been rewritten from "1" to "0". Fig.3F shows the state in which, as a result of purchasing the functions E, F and G sequentially, the function limiting flags pertinent to the functions E to G have been rewritten from "1" to "0".

Preferably, the key issuing source 5 generates the limitation removing key in combination with the apparatus ID, sent from the user 1, so that the limitation removing key will be valid only for the apparatus 10 in question, or so that, in case the limitation removing key is inadvertently delivered to a third party, the key cannot be used by the third party.

In this case, the limitation removing processing routine of the apparatus 10 is formulated in such a manner that the CPU 11 of the apparatus 10 verifies whether or not the apparatus ID, separated from the limitation removing key, as entered by the user 1, coincides with the own apparatus ID, that is, the apparatus ID in the ROM 13, to check whether or not the limitation removing key is for no other than the apparatus 10, and in such a manner that the setting table is re-written to remove the limitation on using the function(s) in question only if the limitation removing key is for no other than the apparatus 10.

For elevating the confidentiality of the limitation removing key to prohibit tampering, the key issuing source 5 preferably encrypts the limitation removing key to issue the so encrypted limitation removing key. In this case, the CPU 11 of the apparatus 10 decodes the limitation removing key entered by the user 1 to execute the aforementioned limitation removing processing.

The case in which a limitation removing key is issued and acquired using a mobile phone terminal is now explained.

In the above-described method, the user has to enter the limitation removing key, acquired by mail or fax, to the apparatus 10 by a letter/ character inputting method. In addition, the limitation removing key has to be raised in redundancy in order to elevate confidentiality and to prohibit tampering. The result is the increased information volume of the limitation removing key. Consequently, the user has to input a long letter/ character string as a limitation removing key, while the risk of error in inputting tends to be increased.

Hence, such a method is simple and effective in which a mobile terminal, provided with a wireless communication function and an infrared ray communication function, in particular the wireless communication function, is used, to apply for purchasing the function(s) from the key issuing source, to acquire the limitation removing key from the key issuing source, and in which the so acquired limitation removing key is transmitted to the apparatus 10 by the infrared ray communication function.

For such mobile terminal, a mobile phone terminal, provided with the infrared ray communication function, is preferred. The mobile phone terminal, provided with the infrared ray communication function, is in widespread use. If loaded with a Web browser function, the the mobile phone terminal may be connected to Web sites to acquire the information. In addition, by the infrared ray communication function, the mobile phone terminal is able to operate as a remote commander (remote controller) to control a TV receiver or audio equipment, or to directly transfer the picture information to another mobile phone terminal.

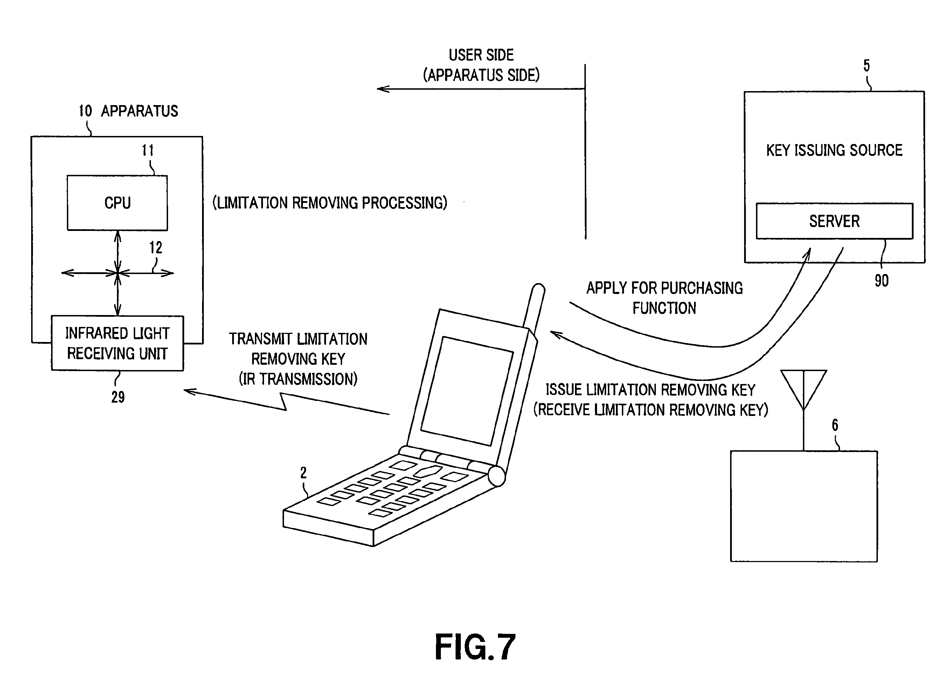

Fig.7 shows a case where the mobile phone terminal, provided with the infrared ray communication function, is used in order for the user to apply for purchasing the function(s) from the key issuing source 5 to acquire the limitation removing key from the key issuing source 5 to send the so acquired limitation removing key to the apparatus 10.

The apparatus 10 has the infrared ray communication function, as shown in Fig.2, and is able to receive commands and data by infrared rays.

The mobile phone terminal 2 includes the wireless communication function and is loaded with the Web browser function. In addition, the mobile phone terminal includes the infrared ray communication function, and is able to transmit by infrared rays to the apparatus 10.

A server 90 of the key issuing source 5 is provided with Web contents (application) corresponding to the Web browser function of the mobile phone terminal 2. The user may connect from the mobile phone terminal 2 through a mobile phone base station 6 to the server 90 to apply for purchasing the function to acquire the limitation removing key.

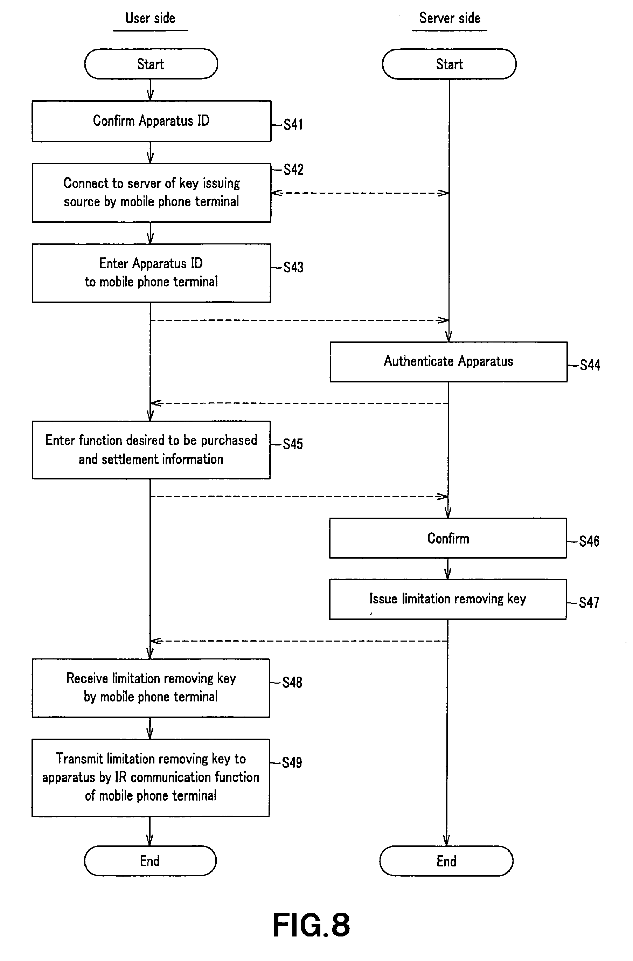

Fig.8 shows an example of the limitation removing key acquisition processing for this case. In a limitation removing key acquisition processing 40 for this example, the user in a step S41 first recognizes an apparatus ID of the apparatus 10. In the next step S42, the user connects the mobile phone terminal 2 to the server 90 and, in the next step S43, inputs the apparatus ID of the apparatus 10 to the mobile phone terminal 2.

The server in a step S44 authenticates the apparatus by the apparatus ID to notify the mobile phone terminal 2 of the fact of notification.

The user on receipt of the notification inputs the function(s) he/she is desirous to purchase and the settlement information to the mobile phone terminal 2. The server side in a step S46 confirms the input information and, in the next step S47, generates and transmits (issues) a limitation removing key.

The user in a step S48 receives (acquires) the limitation removing key by the mobile phone terminal 2 and proceeds to a step S49 to transmit the limitation removing key, by the infrared ray communication function of the mobile phone terminal 2, from the mobile phone terminal 2 to the apparatus 10.

By this limitation removing key, the CPU 11 of the apparatus 10 rewrites the setting table in the non-volatile memory 15.

With this method, the user is able to apply for purchasing the function(s) readily reliably to acquire the limitation removing key, even in case the apparatus 10 is not provided with the function of connection to the network. In addition, the user is able to input the limitation removing key, thus acquired, to the apparatus 10, readily and reliably, without producing input errors.

The apparatus 10 is able to deal with the situation, by changing the control software, without the necessity of adding special circuitry, provided that the infrared ray communication function, widely used in household apparatus, is loaded on the apparatus 10.

Moreover, if the user owns the information, needed for purchasing the function(s), he/she may apply for purchasing the function(s) to acquire the limitation removing key, even if he/she is at a remote place, as when he/she is outing. In addition, he/she may save the acquired limitation removing key in a memory of the mobile phone terminal 2 and hence there is no risk of loss of the acquired limitation removing key.

As an alternative method for offline procedure, the system may be constructed such that a user applies for purchasing the function(s) to the key issuing source, by a method such as electronic mail, by exploiting a PC (personal computer), to acquire the limitation removing key from the key issuing source.

In such case, it is sufficient that a user connects the PC to the apparatus 10 by e.g. a USB (Universal Serial Bus) cable, in order to transfer the limitation removing key acquired on the PC from the PC to the apparatus 10.

The online issuing and acquisition of the limitation removing key is now explained.

With the online procedure, shown only schematically in Fig.1, in contrast to the mailing and fax transmission, described above, the risk of the apparatus ID or the limitation removing key being delivered to a third party is low, while the apparatus ID or limitation removing key may be improved in confidentiality. Moreover, in distinction from the above-described method employing the mobile phone terminal or the PC, the limitation removing key, transmitted from the key issuing source, may directly be received by the apparatus 10, without requiring the user's inputting operation.

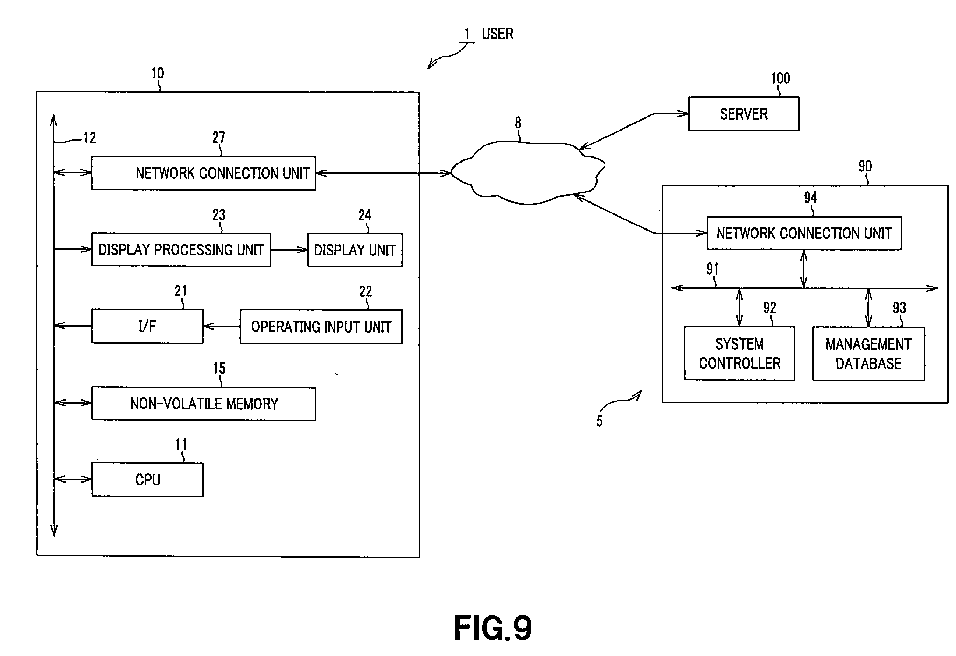

Fig.9 shows an example of the online system. The apparatus 10 on the side of the user 1 is provided with the network connection unit 27, as described above, whilst the server 90 of the key issuing source 5 includes a system bus 91, to which are connected e.g. a system controller 92, a management database 93, and a network connection unit 94. To the wide area network 8 is connected a server 100 of a Shinpan (credit card) company.

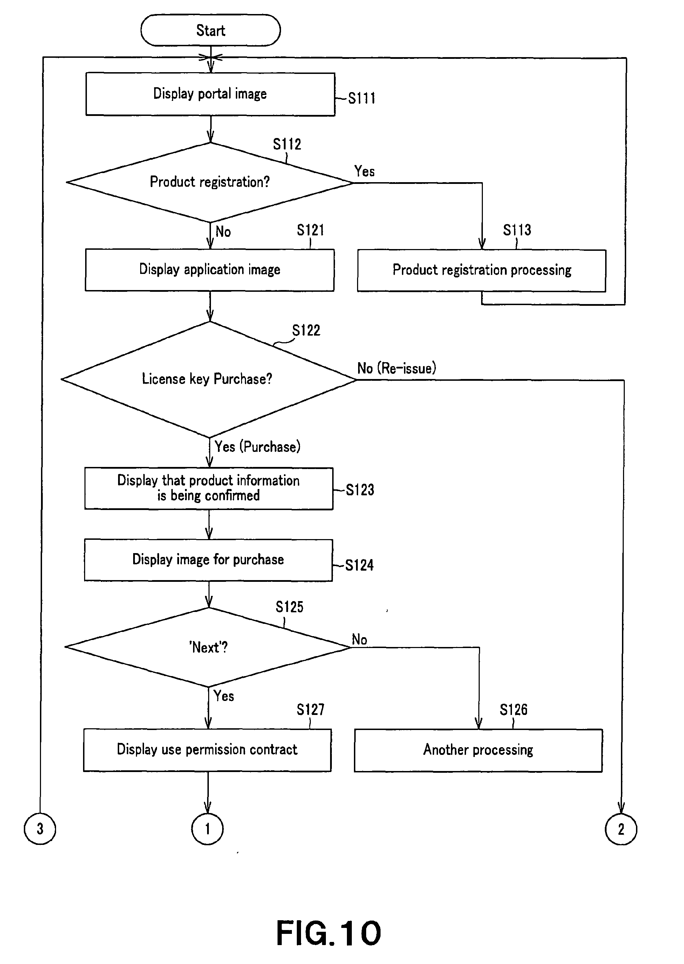

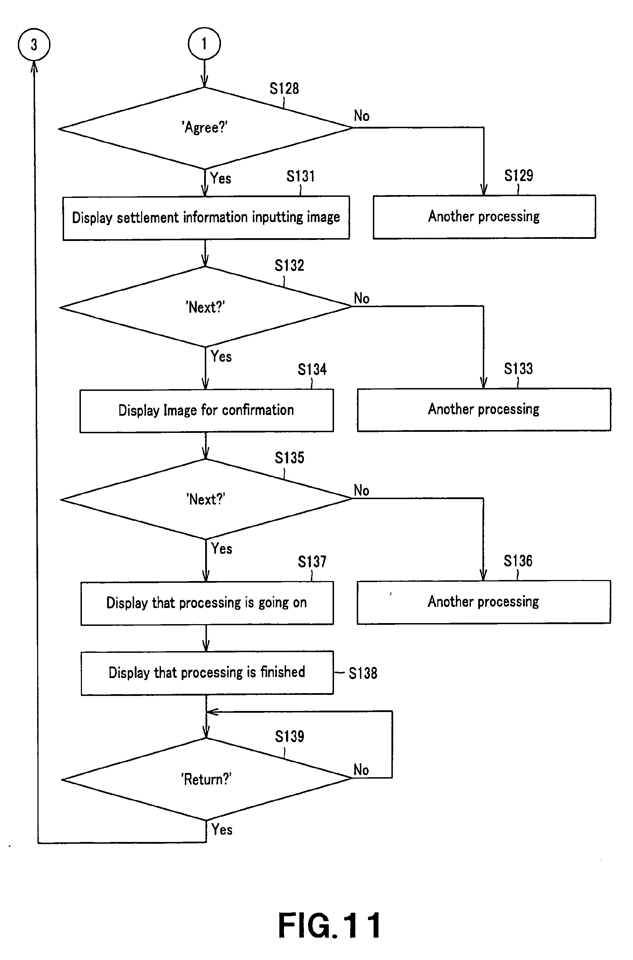

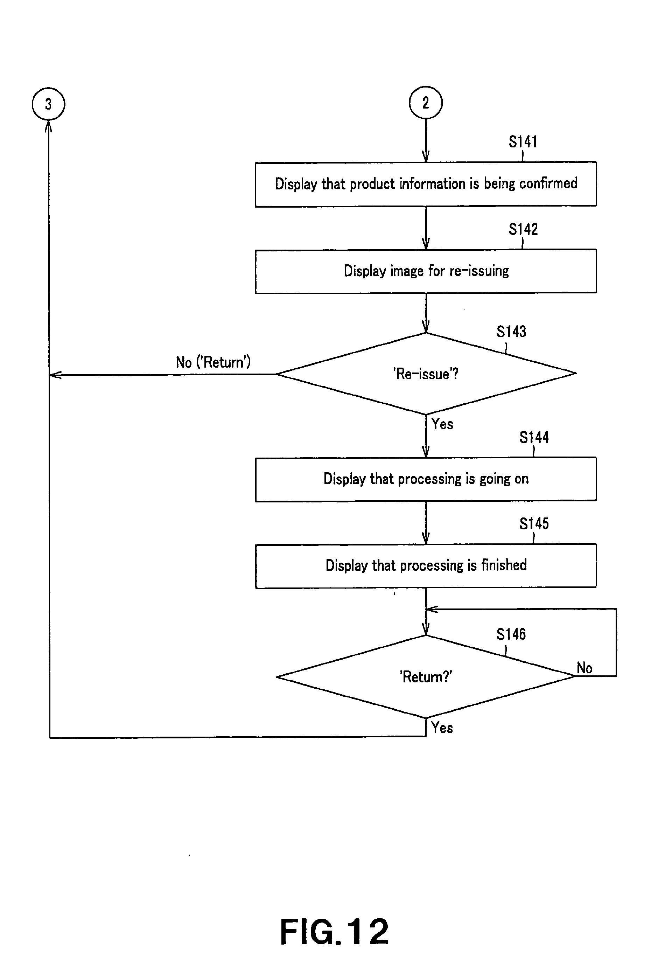

In this system, a button for direct connection to the server 90 of the key issuing source 5 is provided to, for example, the operating input unit 22 of the apparatus 10. By pressing this button, the Web browser is booted to connect the apparatus 10 to the server 90, such that a limitation removing key may be acquired on the apparatus 10 by the limitation removing key acquisition processing subroutine shown in Figs.10 to 12.

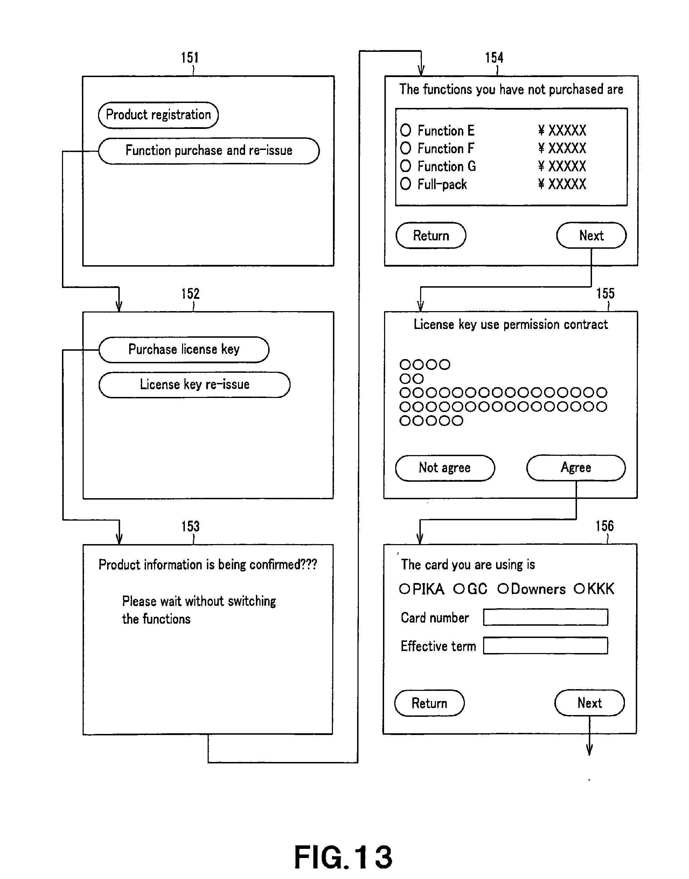

That is, with the present embodiment of the limitation removing key acquisition processing routine, if the above button is pressed to boot the Web browser, a portal image 151, such as is shown in Fig.13, is demonstrated in a step S111 on the display unit 24.

On the portal image 151, two menus 'product registration' and 'function purchasing and re-issuing' are displayed. If the user purchases the function(s) for the first time as from the time of apparatus purchase, he/she first selects 'product registration'.

In the limitation removing key acquisition processing routine, it is checked in a step S112, after demonstrating the portal image 151 in the step S111, whether product registration has been selected or the function re-purchasing and re-issuing has been selected. If product registration has been selected, the CPU proceeds to a step S113 to execute product registration processing.

At this time, the apparatus 10 encrypts the apparatus ID of the apparatus 10 in accordance with a preset encryption algorithm to send the so encrypted apparatus ID to the server 90. This server then receives and decrypts the apparatus ID to register the apparatus 10 in the management database 93. During this time interval, the effect that the processing of registration is going on is demonstrated in the display unit 24.

When the registration processing in the server 90 has come to a close, the limitation removing key acquisition processing routine 110 reverts from the step S113 to the step S111 to display the portal image 151.

After registration of the apparatus 10, the user selects 'function purchase re-issuing'. When the user selects function purchase and re-issuing, the limitation removing key acquisition processing routine transfers from the step S111 through the step S112 to a step S121 to display an application image 152 shown in Fig.13.

In the application image 152, two menus of 'license key purchasing' and 'license key re-issuing' are displayed. The license key is the limitation removing key. The reissuing of the license key means reissuing the limitation removing key pertinent to the function previously purchased by the user. When purchasing the function(s), the user selects 'license key purchasing'.

In the limitation removing key acquisition processing routine, the application image 152 is displayed in the step S121 and, in a step S122, it is checked whether the license key purchasing has been selected or the license key re-reissuing has been selected. When the license key purchasing has been selected, the CPU proceeds to a step S123 to demonstrate that the product information is being confirmed, as shown in an image 153 in Fig. 13.

At this time, the server 90 confirms the product information registered in the management database 93, that is, the apparatus ID of the apparatus 10, the functions use-limited at the time of shipment of the apparatus 10, out of the functions of the apparatus 10 specified by the apparatus ID, and the functions already purchased by the user, out of the above use-limited functions.

After confirming the product information, the limitation removing key acquisition processing routine proceeds from the step S123 to a step S124 to demonstrate an image for purchasing 154 shown in Fig. 13.

In the image for purchasing 154, the function(s) not as yet purchased by the user is displayed. In Fig. 13, since the functions E to G, use-limited at the time of shipment of the apparatus 10, are not purchased, all of these functions E to G are displayed. Moreover, in this case, a purchase item 'full-pack' is displayed. This is simultaneously purchasing the use-limited functions E to G in a lump. After selecting the functions, desired to be purchased, the user selects 'next'.

The limitation removing key acquisition processing routine 110 verifies, after displaying the image for purchasing 154 in the step S124, which of 'next' and 'return' has been selected in the step S125. If 'return' has been selected, the routine proceeds to a step S126 to execute another processing. If 'next' is selected, the routine proceeds to a step S127 to display the use permission contract, as indicated in an image 155 of Fig.13.

The use allowance contract obligates the user 1 not to deliver a limitation removing key, acquired by purchasing the apparatus, to a third party by a method other than a method as approved by the contract, or not to tamper with data of the above setting table or management table. The user selects agree'.

After displaying the use allowance contract in the step S127, the limitation removing key acquisition processing routine 110 verifies which of 'agree' or 'not agree' has been selected in the next step S128. If 'not agree' has been selected, the routine proceeds to the next step S129 to execute another processing. If 'agree' has been selected, the routine proceeds to the next step S131 to display a settlement information inputting image 156 shown in Fig. 13.

The settlement information inputting image 156 is an image for paying the fee for function purchasing by a credit card. The user selects the sort of the credit card (the Shinpan company which issued the credit card), number and the effective term, and then selects 'next'.

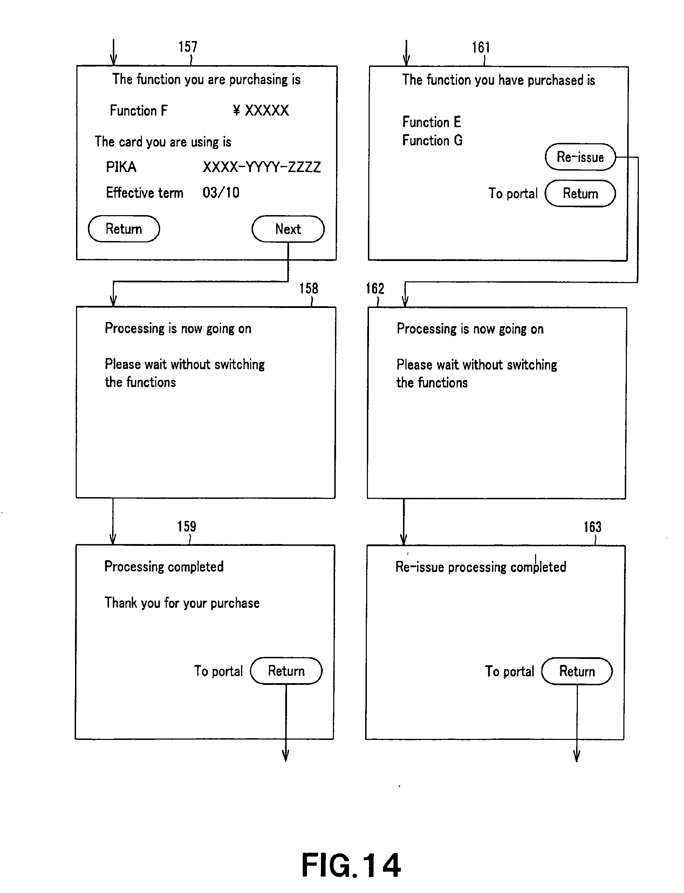

After displaying the settlement information inputting image 156 in the step S131, the limitation removing key acquisition processing routine 110 in a step S132 verifies which of 'next' and 'return' has been selected. If 'return' has been selected, the routine proceeds to a step S133 to carry out another processing. If 'next' has been selected, the routine proceeds to a step s 134 to display an image for confirmation 157 shown in Fig.14.

In the image for confirmation 157, the function(s) selected as a function desired to be purchased by the user, and the settlement information input by the user in the settlement information inputting image 156 shown in Fig.13, are displayed in the image for purchasing 154 shown in Fig. 13. If there is no error in the displayed contents, the user selects 'next'.

The limitation removing key acquisition processing routine 110 displays the image for confirmation 157 in the step S134, and verifies, in the next step S135, which of the 'next' and 'return' has been selected in the step S135. If 'return' has been selected, the routine proceeds to a step S136 to carry out another processing and, if 'next' has been selected, the routine proceeds to a step S137 to indicate that the processing is going on, as indicated in an image 158 in Fig.14.

At this time, the apparatus 10 encrypts the apparatus ID of the apparatus ID and transmits the apparatus ID, thus encrypted, the function(s) desired to be purchased, settlement information and a command for applying for purchase of the function(s), to the server 90.

On receipt of these, the server 90 decodes the apparatus ID and connects to the server 100 of the Shinpan company to confirm the settlement information, after which the server generates the key information for removing the use limitation of the functions, desired to be purchased by the user, in combination with the apparatus ID of the apparatus 10.

The server 90 then charges the fee for the functions purchased and records the charging information, as one of the product information, in the management database 93. The server also encrypts the so generated limitation removing key in accordance with a preset encryption algorithm to transmit the so encrypted limitation removing key to the apparatus 10.

On receipt of the limitation removing key by the apparatus 10, the limitation removing key acquisition processing routine 110 proceeds from the step S137 to a step S138 to display that the processing has come to a close, as indicated on an image 159 of Fig.14.

When the user commands 'return' in this state, the limitation removing key acquisition processing routine 110 in a step S139 first checks that 'return' has been commanded, and then returns to the step S111 to display the portal image 151.

There are occasions where, even if the limitation removing key has been acquired in the apparatus 10, as described above, use limitations on the function(s) are not removed due to occurrence of unusual situations during transmission, as will be explained subsequently. In such case, the user may request the key issuing source 5 to re-issue the limitation removing key.

In requesting the re-issuing of the limitation removing key, the user selects 're-issuing of license key' in a state in which the application image 152, shown in Fig.13, has been displayed in the step S121 of the limitation removing key acquisition processing routine 110.

Then, in a step S122, the limitation removing key acquisition processing routine 110 verifies that the re-issuing of the license key has been selected, and proceeds to a step S141 to display that the product information is being confirmed, as in an image 153 of Fig.13.

At this time, the server 90 confirms the product information registered in the management database 93, that is, the apparatus ID of the apparatus 10, the function(s) of the apparatus, as identified by the apparatus ID, and use-limited at the time of shipment, the functions already purchased by the user, out of these use-limited functions, and the charging information therefor.

After completing the confirmation, the limitation removing key acquisition processing routine 110 proceeds from the step S141 to a step S142 to display an image for re-issuing 161 shown in Fig.14.

In the image for re-issuing 161, the function(s) purchased by the user are displayed. Fig.14 shows a case where the user has purchased the functions E and G. If there is no error in the displayed contents, the user selects 're-issuing'.

In the limitation removing key acquisition processing routine 110, after displaying the image for re-issuing 161 in the step S142, it is checked in a step S143 which of the 're-issuing' and 'return' has been selected. If 'return' has been selected, the routine returns to the step S111 to display the portal image 151. However, if 'reissuing' is selected, the routine proceeds to a step S 144 to display that the processing is going on, as indicated by an image 162 in Fig.14.

At this time, the apparatus 10 encrypts the apparatus ID of the apparatus 10 and transmits the so encrypted apparatus ID and a limitation removing key re-issuing application command to the server 90.

The server 90 receives these and decodes the apparatus ID to generate the key information for removing the use limitations on the function(s) purchased by the user, as at the time of purchasing the function(s). The server then encrypts the key information and transmits the so encrypted key information to the apparatus 10.

When the apparatus 10 has received the limitation removing key, the limitation removing key acquisition processing routine 110 proceeds from the step S144 to a step S145, and demonstrates that the re-issuing processing has come to a close, as indicated by an image 163 of Fig. 14.

If the user commands 'return' in this state, the limitation removing key acquisition processing routine 110 in a step S146 confirms that 'return' has been commanded. The routine then reverts to the step S111 to display the portal image 151.

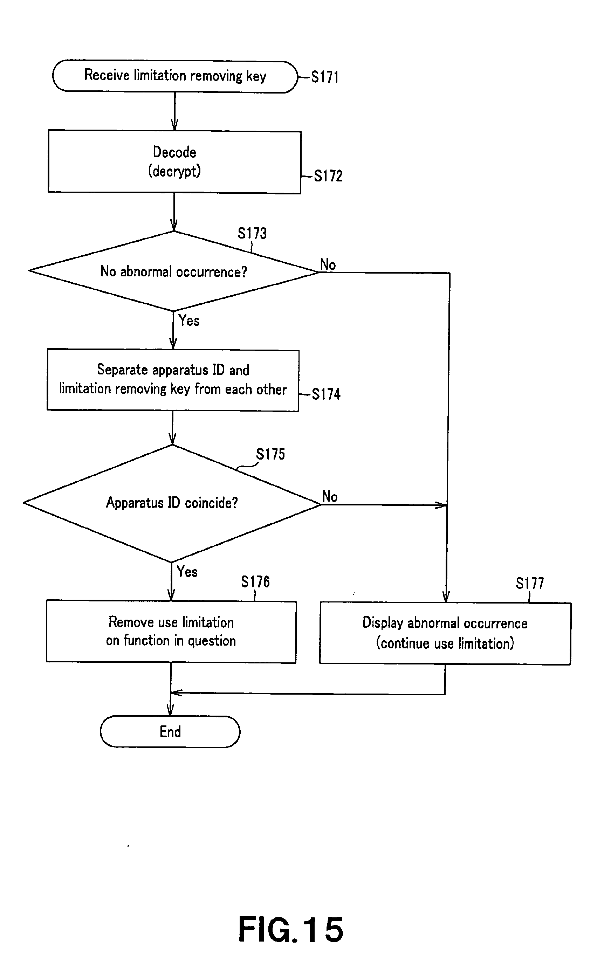

On acquisition of the limitation removing key by the above-described method, the apparatus 10 releases the use limitations of the function(s) by the method shown in Fig. 15.

That is, when the encrypted limitation removing key, inclusive of the apparatus ID, is received in a step S171, the limitation removing key acquisition processing routine proceeds to a step S172 to decode (decrypt) the limitation removing key. The routine then proceeds to a step S173 to check to see that there are no abnormal occurrences, such as tampering. If there are no abnormal occurrences, the routine proceeds to a step S174 to separate the apparatus ID and the inherent limitation removing key from the decrypted limitation removing key. The routine further proceeds to a step S 175 to verify whether or not the apparatus ID thus separated coincides with the own apparatus ID, that is, with the apparatus ID in the ROM 13.

When the separated apparatus ID coincides with the own apparatus ID, the routine determines that the separated apparatus ID is for the apparatus in question, and proceeds from the step S175 to a step S176 to remove the use limitations for the functions in question. This removal is carried out by re-writing the setting table in the non-volatile memory 15, as described above.

If it is determined in the step S173 that there are abnormal occurrences, or that the apparatus ID, separated in the step S175, is not coincident with the own apparatus ID, the routine proceeds to a step S177 to demonstrate abnormal occurrences on the display processing unit 24, and continues the use limitations for the function(s) in question, without rewriting the setting table in the non-volatile memory 15.

The control on function execution following removal of the use limitations is as described with reference to Fig.4.

The system may also be constructed so that, in setting the number of days of possible test use, an application for extension (increase) of the number of days of possible test use may be made from the user 1 or the apparatus 10 to the key issuing source 5 or to the server 90, by the same method as that in purchasing the function(s), and the key information (commands and data) for extending the number of days of possible test use may be issued from the key issuing source 5 or from the server 90 to the user 1 or to the apparatus 10, by the same method as that in issuing the limitation removing key. In this case, the processing routine executed by the CPU 11 of the apparatus 10 is formed so that the number of days of possible test use in the aforementioned setting table will be re-written from e.g. 30 days to 40 days.

In the above-described embodiment, the number of days of possible test use is set unanimously for each of the respective use-limited functions. Alternatively, the number of days of possible test use may also be uniquely set for each use-limited function.

For the use-limited functions, the number of times of possible test use may be set in place of the number of days of possible test use. Alternatively, the period for possible test use may also be set, such as 60 days as from the date of first use of the function in question.

The system may also be set so that, in setting the number of days or the number of times of possible test use, or the time period of such possible test use, the number of days or times of possible test use or the time period of possible test use is not extended based on an application from the user 1 or from the apparatus 10, as described above, but the test use (use free of charge) will be permitted for the user 1 for a further preset number of days, a further preset number of times or for a further preset time period, after end of the usable number of days or times, or of the usable time period, in order for the key issuing source 5 to prompt the user 1 to purchase the function(s).

More specifically, the system is so constructed that the server 90 of the key issuing source 5 connects to the apparatus 10, the product information, such as apparatus ID, of which is known to the server from the outset, and transmits the key information (commands and data), which will newly set the number of days or times or the time period of possible test use, to the apparatus 10, the CPU 11 of the apparatus 10 then rewriting the setting table and the management table in the non-volatile memory 15 based on the so transmitted key information.

There are occasions where the user 1 purchases an apparatus 10 and certain use-limited functions, and subsequently the apparatus 10 is recovered, by transactions or disposal, by the apparatus producer 3 or the key issuing source 5. In this consideration, it is desirable to construct the apparatus 10 so that the apparatus producer 3 or the key issuing source 5 will be able to set (re-set) the apparatus 10 in a state of limiting the use of certain functions, as at the time of initial shipment of the apparatus 10.

The above-described embodiment is directed to a case where the user purchases an apparatus and a use-limited function(s). This invention may, however, be applied to such a case wherein an apparatus producer or a company having business relationship therewith acts as a source of use permission (key issuing source) to lease or rent the apparatus to a user.

In this case, the apparatus and the system are constructed so that, at the time of initial leasing or renting, the leasing period or the rental period is determined as the allowed use range, and so that, when the user is desirous to have the apparatus re-leased or re-rented, he/she applies for re-leasing or re-renting before the key issuing source (leasing source or renting source) by a method for application similar to one used in purchasing the function(s) as described above. The key issuing source then issues the key information (commands and data) allowing for re-leasing or re-renting to the user or the apparatus. The user then inputs the key information to the apparatus or the apparatus receives the key information in order to set the re-leasing or re-renting in the apparatus. The setting of the re-leasing or re-renting may be carried out by the CPU of the apparatus re-writing the setting information such as to extend the allowed use range (leasing or renting period).

The apparatus and the system are also constructed so that, if the lease period or the rental period has lapsed without the user having the apparatus re-leased or re-rented, the CPU of the apparatus autonomously re-writes the setting information such as to inhibit the use of the function(s) of the subject of leasing or renting. Or, the key issuing source (source of leasing or renting) connects to an apparatus, the apparatus ID of which has become known from the outset, and transmits the key information (commands and data), which will prohibit the apparatus from using the function(s) of the subject of leasing or renting, with the CPU of the apparatus then rewriting the setting information based on the key information.

In the above-described embodiment, the present invention is applied to an audio apparatus. The present invention is, however, not limited to the audio apparatus, and may be applied to AV equipment, such as a video apparatus or an AV amplifier, or to other electronic equipment.

The present invention is not limited to the foregoing embodiments, explained in conjunction with the drawings. It would be apparent to those skilled in the art that various changes, substitutions or equivalents may be attempted without departing from the scope and purport of the invention as defined in the claims.

### Industrial Applicability

According to the present invention, described above, it is possible to meet the demands for functions and cost of the apparatus, entertained by a larger number of consumers. In addition, the apparatus producer is able to lower the cost of the apparatus so that a larger number of consumers may purchase the apparatus.

As for a use-limited function(s), hardware circuitry for carrying out the functions or the software exemplified by a program is loaded on the apparatus, and only the key information for removing the use limitations is distributed, so that the risk attendant on the distribution may be lowered as compared to the case where the program is distributed for adding the function(s) after shipment of the apparatus.

## Claims

1. An electronic apparatus having one or more functions on which use limitations can be imposed, comprising
a function executing unit for executing said function(s);
storage means for storing the contents of use limitations for said function(s); and
limiting means for storing the contents of use limitations for said function(s), derived from input use-permitting key information, in said storage means, and for referencing the contents of use limitations stored in said storage means to limit function execution in said function executing unit.

2. The electronic apparatus according to claim 1 wherein the contents of use limitations for said functions are the number of days or times of use allowed for use or the time period allowed for use.

3. The electronic apparatus according to claim 2 further comprising
second storage means for storing the number of days or times said function(s) has been used in said function executing unit;
said controlling means when requested to execute the function(s) in said function executing unit referencing the contents of use limitations stored in said storage means and said number of days or times of use stored in said second storage means to control the function execution in said function executing unit.

4. The electronic apparatus according to claim 1 further comprising
an operating input unit for inputting said use-permitting key information supplied from a source of use permission.

5. The electronic apparatus according to claim 1 further comprising
a bar code readout unit for reading said use-permitting key information, printed as a bar code, supplied from said source of use permission.

6. The electronic apparatus according to claim 1 further comprising
an infrared light receiving unit for receiving said use-permitting key information, acquired from a source of use permission by wireless communication by a mobile terminal having a wireless communication function and an infrared ray communication function, said use-permitting key information being transmitted by infrared communication to the electronic apparatus.

7. The electronic apparatus according to claim 1 further comprising
receiving means for receiving said use-permitting key information transmitted from a source of use permission over a network.

8. An electronic apparatus having one or more functions on which use limitations can be imposed, comprising
a function executing unit for executing said function(s);
storage means for storing the contents of use limitations for said function(s);
transmitting means for transmitting apparatus identifying information for identifying the electronic apparatus and a request for permission for using the electronic apparatus over a network to a server of a source of use permission;
receiving means for receiving the use-permitting key information transmitted from said server responsive to said request for using the electronic apparatus; and
controlling means for storing the contents of use limitations for said function(s), derived from input use-permitting key information, received by said receiving means, and for referencing the contents of use limitations stored in said storage means to limit function execution in said function executing unit.

9. The electronic apparatus according to claim 8 wherein the contents of use limitations for said function(s) are the number of days or times of use allowed for use or the time period allowed for use.

10. The electronic apparatus according to claim 9 further comprising
second storage means for storing the number of days or times said function(s) has been used in said function executing unit;
said controlling means when requested to execute the function(s) in said function executing unit referencing the contents of use limitations stored in said storage means and said number of days or times of use stored in said second storage means to control the function execution in said function executing unit.

11. The electronic apparatus according to claim 8 wherein
said transmitting means and the receiving means are a mobile terminal having a wireless communication function and an infrared ray communication function; and wherein
said electronic apparatus includes an infrared light receiving unit for receiving said use-permitting key information acquired by said mobile terminal by wireless transmission from a source of use permission and transmitted by infrared communication.

12. A function controlling method for controlling the use of one or more functions owned by an electronic apparatus, said method comprising the steps of
transmitting the apparatus identifying information for identifying said electronic apparatus and a request for permitting the use of said function(s) to a source of use permission of said function(s) to a source of use permission;
receiving the use-permitting key information transmitted from said source of use permission responsive to said request for use permission; and
referencing the contents of use permission for said function(s), derived from said use-permitting key information, to control the use of said function(s).

13. The function controlling method according to claim 12 wherein
the contents of use permission for said functions are the number of days or times of use allowed or the time period allowed for use.

14. The function controlling method according to claim 13 further comprising a step of
storing the number of days or times of use of said function(s);
said controlling step referencing the contents of use permission and the number of days or times of use to control the use of said function(s).

15. A function controlling method for controlling the use of one or more functions owned by an electronic apparatus, said method comprising the steps of
transmitting the apparatus identifying information, identifying the electronic apparatus, and a request for use permission of said function(s), to a server as a source of use permission, over a network; and
referencing the use-permitting key information, transmitted from said server responsive to said request for use permission, to control the use of said function(s).

16. The function controlling method according to claim 15 wherein
the contents of use limitations for said function(s) are the number of days or times of use allowed or the time period allowed for use.

17. The function controlling method according to claim 16 further comprising a step of
storing the number of days or times of actually using said function(s);
said controlling step when requested to execute the function(s) referencing the contents of use permission and said number of days or times of use to limit the use of said function(s).

18. The function controlling method according to claim 15 wherein
said transmitting step transmits said apparatus identifying information and a request for use permission from a mobile terminal having a wireless communication function;
said receiving step receiving the use-permitting key information, transmitted from said server, from said mobile terminal, and transmitting the received use-permitting key information to said electronic apparatus by an infrared ray communication function owned by said mobile terminal.

19. A method for controlling one or more functions owned by an electronic apparatus, comprising the steps of
receiving the apparatus identifying information for identifying the electronic apparatus and a request for use permission of said function(s), transmitted from said electronic apparatus; and
generating the use-permitting key information, responsive to said request for use permission, to send the use-permitting key information generated to said electronic apparatus.

20. The method for controlling the function(s) according to claim 19 wherein
the contents of use limitations for said functions are the number of days or times of use allowed for use or the time period allowed for use.

21. A method for controlling one or more functions owned by an electronic apparatus, comprising the steps of
having the apparatus identifying information for identifying the electronic apparatus and a request for use permission of said function(s) transmitted from a mobile terminal having a wireless communication function, and receiving said information and the request; and
generating use-permitting key information responsive to said contents of use permission to transmit the use-permitting key information to said mobile terminal.

22. The function controlling method according to claim 21 wherein the contents of use permission for said function(s) are the number of days or times of use allowed or the time period allowed for use.

23. A method for controlling one or more functions owned by an electronic apparatus, comprising the steps of
transmitting the apparatus identifying information for identifying the electronic apparatus and a request for use permission of said function(s) over a network to a server as a source of use permission;
said server generating the use-permitting key information for said function(s), responsive to said request for use permission, to send the use-permitting key information generated to said electronic apparatus; and
said electronic apparatus receiving said use-permitting key information and referencing said use-permitting key information to control the use of said function(s).

24. The method for controlling the function(s) according to claim 23 wherein
the contents of use limitations for said functions are the number of days or times of use allowed or the time period allowed for use.

25. The method for controlling the function(s) according to claim 24 further comprising the step of
said electronic apparatus storing the number of days or times of using said function(s);
said controlling step referencing the contents of use permission or the number of days or times of use to control the use of said function(s).

26. The method for controlling the function(s) according to claim 23 wherein,
in said transmitting step, said apparatus identifying information and the use permission information are transmitted from a mobile terminal having a wireless communication function; and wherein,
in said receiving step, the use permission information, transmitted from said server, is received by said mobile terminal; the use permission information received being transmitted to said electronic apparatus by an infrared ray communication function owned by said mobile terminal.

27. A server comprising
key generating means for generating use-permitting key information, controlling one or more functions, responsive to the apparatus identifying information for identifying the electronic apparatus and to a request for use permission of said function(s) owned by said electronic apparatus; and
a management database for registration of the information concerning said electronic apparatus, inclusive of the apparatus identifying information, contents of use permission and the information indicating the issuing hysteresis of requests for use permission.

28. A server comprising
means for receiving the apparatus identifying information for identifying an electronic apparatus, and a request for using one or more functions of said electronic apparatus, transmitted from said electronic apparatus, said functions being owned by said electronic apparatus and being those for which use limitations can be set;
key generating means for generating use-permitting key information, controlling said function(s), responsive to said request for use permission; and
means for transmitting the use-permitting key information generated to said electronic apparatus.

29. A server comprising
means for having the apparatus identifying information for identifying an electronic apparatus, and a request for use permission of one or more functions of said electronic apparatus, transmitted from a mobile terminal having a wireless communication function, and receiving said information and the request, said functions being owned by said electronic apparatus and being such ones on which use limitations can be set;
key generating means for generating use-permitting key information, controlling said function(s), responsive to said contents of use permission; and
means for transmitting the generated use-permitting key information to said mobile terminal.
